# EUROPÄISCHE PATENTSCHRIFT

(11) **EP 3 668 105 B1**
(45) Veröffentlichungstag und Bekanntmachung des Hinweises auf die Patenterteilung: **21.02.2024**
(21) Anmeldenummer: 18211355.5
(22) Anmeldetag: 10.12.2018
(51) Int. Cl.: H04Q 9/00, H04J 3/06, H04B 10/116, H04L 7/00

(54) **SYNCHRONISATION IN EINEM SENSORNETZWERK**
SYNCHRONISATION IN A SENSOR NETWORK
SYNCHRONISATION DANS UN RÉSEAU DE CAPTEURS

(43) Veröffentlichungstag der Anmeldung: 17.06.2020
(73) Patentinhaber: ArianeGroup GmbH, 82024 Taufkirchen (DE)
(72) Erfinder: Kesuma, Hendra, 28199 Bremen (DE); Sebald, Johannes, 28199 Bremen (DE)
(74) Vertreter: Marschall, Stefan

(56) Entgegenhaltungen:
- EP-A1- 2 675 224
- EP-A1- 3 154 241
- EP-A2- 2 158 841
- WO-A1-2018/013569
- US-B1- 8 050 881
- HENDRA KESUMA ET AL: "Time Synchronization/ Stamping Method with Visible Light Communication and Energy Harvesting Method for Wireless Sensor Network inside Ariane 5 Vehicle Equipment Bay", DASIA 2016, DATA SYSTEMS IN AEROSPACE 2016, 31. August 2016 (2016-08-31), Seiten 1-6, XP055595302, Tallin, Estonia ISBN: 978-92-9-221301-5

## Beschreibung

Die vorliegende Erfindung betrifft einen Sensorknoten und eine Basisstation jeweils für ein Sensornetzwerk. Darüber hinaus betrifft die Erfindung ein Sensornetzwerk, ein Verfahren zur Zeitstempelung von durch einen Sensorknoten in einem Sensornetzwerk erfassten Messdaten sowie ein Verfahren zur Synchronisation von Knoten eines Sensornetzwerks.

Sensornetzwerke werden vielfach dazu eingesetzt, physikalische Größen wie Temperatur, Luftdruck, Helligkeit, Druck oder Vibration an verschiedenen Positionen durch Sensoren zu erfassen, weiterzuleiten und zentral auszuwerten. Die jeweils gemessenen Werte werden dazu kabelgebunden oder kabellos an mindestens eine jeweilige Basisstation übertragen.

Drahtlose Sensornetzwerken (in denen Sensorknoten und mindestens eine Basisstation drahtlos miteinander kommunizieren können) sind dabei aufgrund ihrer Flexibilität und Mobilität in der Installation sowie wegen des Wegfalls von Verkabelungen und damit Masse insbesondere in der Raumfahrt vorteilhaft.

Für die Auswertung der erfassten Daten ist der jeweilige Erfassungszeitpunkt von Bedeutung. Die einzelnen Sensorknoten haben dazu herkömmlicherweise jeweils eine eigene Uhr, mittels deren die Messwerte jeweils mit einem Zeitstempel versehen werden. Die verschiedenen Uhren unterscheiden sich in ihren physikalischen Eigenschaften (Temperaturabhängigkeit, etc) und sind zusätzlich unterschiedlichen Umgebungsbedingungen ausgesetzt, die sich auf das Schwingungsverhalten der in den Uhren enthaltenen Oszillatoren auswirken. Damit die von den verschiedenen Uhren gelieferten Zeiten gleichwohl vergleichbar sind, ist eine Synchronisierung erforderlich. Verschiedene Vorgehensweisen und Protokolle sind hierfür zur Anwendung in kabelgebundenen Netzwerken einerseits und in drahtlosen Netzwerken andererseits bekannt. Anders als in kabelgebundenen Netzwerken ist die Synchronisierung in kabellosen Sensornetzwerken beispielsweise aufgrund des üblicherweise beschränkten Energievorrats der Sensorknoten problematisch.

In dem Artikel "Time Synchronization/ Stamping Method with Visible Light Communication and Energy Harvesting Method for Wireless Sensor Network inside Ariane 5 Vehicle Equipment Bay" of H. Kesuma et al. (veröffentlicht in: Proc. 'DASIA 2016', DAta Systems in Aerospace, Tallinn, Estonia, 10-12 May, 2016) ist ein Zeitstempelverfahren offenbart, demzufolge nicht jeder Messwert einen Zeitstempel erhält, sondern nur Informationen über eine Messfolge und eine frühere Zeitinformation zusammen mit den jeweiligen Messwerten und zugehöriger Protokollinformation von den Knoten an eine Basisstation übermittelt wird.

In der Druckschrift "Pull-Based Modeling and Algorithms for Real-Time Provision of High-Frequency Sensor Data from Sensor Observation Services" von H. Li et al. (veröffentlicht in ISPRS Int. J. Geo-Inf. 2016, 5, 51) wird das Problem behandelt, dass die weit verbreitete pull-basierte Methode zur hochfrequenten Sensordatenerfassung in Echtzeit nicht effizient zu realisieren ist. Dazu werden ein Datenproblemmodell vorgestellt und ein rekursiver Kalman-Filteralgorithmus sowie selbstadaptive lineare Algorithmen mit einer statischen Strategie verglichen, die unveränderte Zeitintervalle erfordert.

Weiterer Stand der Technik ist aus dem Lehrbuch "Fundamentals of Wireless Sensor Networks: Theory and Practice" (W. Dargie, Chr. Poellabauer, first edition, 2010 John Wiley & Sons Ltd.) bekannt.

Weiterer Stand der Technik sind die Druckschriften WO 2018/013569 A1 (MC10 INC [US]) 18. Januar 2018 (2018-01-18) sowie US 8 050 881 B1 (YEUNG KING-WAH WALTER [US] ET AL) 1. November 2011 (2011-11-01), die beide die Oberbegriffe der unabhängigen Ansprüche offenbaren.

Es gibt viele Faktoren, die bei der Implementierung von herkömmlichen Echtzeit-Zeitstempeln zu dynamischen Problemen führen. Insbesondere kann das Zeitintervall zwischen zwei Beobachtungen der Messdaten aus mehreren Gründen kaum konstant gehalten werden, beispielsweise infolge sich zeitlich ändernder Umgebungsbedingungen. Eine weitere Schwierigkeit sind dynamische Anpassungen der Sensor-Abtastrate: Einige intelligente Sensoren können ihre Abtastrate abhängig von verschiedenen Bedingungen automatisch ändern. Herkömmlich bekannte Lösungen zur Adressierung dieser Probleme benötigen einen erheblichen Software- und Hardware-Aufwand. Damit Zeitstempel der Messdaten mit der erforderlichen Genauigkeit zur Verfügung gestellt werden können, ist zudem eine hohe Rechenleistung erforderlich.

Der vorliegenden Erfindung liegt die Aufgabe zugrunde, einen Sensorknoten und eine Basisstation jeweils für ein Sensornetzwerk, ferner ein Sensornetzwerk, ein Verfahren zur Zeitstempelung und ein Verfahren zur Synchronisation von Knoten eines Sensornetzwerks bereitzustellen, die jeweils unter geringem Energie- und Prozessaufwand eine effiziente Erfassung von Messdaten sowie deren genaue zeitliche und räumliche Zuordnung ermöglichen.

Die Aufgabe wird gelöst durch einen Sensorknoten gemäß Anspruch 1, eine Basisstation nach Anspruch 3, eine Sensornetzwerk gemäß Anspruch 5, ein Verfahren zum Zeitstempeln nach Anspruch 7 und ein Verfahren zur Synchronisation von Knoten eines Sensornetzwerks gemäß Anspruch 8, Vorteilhafte Ausführungsformen sind in den Unteransprüchen, der Beschreibung und der Figur offenbart.

Ein erfindungsgemäßer Sensorknoten kann in einem Sensornetzwerk eingesetzt werden oder bereits Teil eines Sensornetzwerks sein.

Er umfasst mindestens einen Sensor zur Messung einer jeweiligen Messgröße wie beispielsweise einer Umgebungstemperatur und/oder - feuchtigkeit, eines Umgebungsdrucks, einer Umgebungshelligkeit, einer Dehnung, einer Vibration oder einer Beschleunigung.

Weiterhin umfasst ein erfindungsgemäßer Sensorknoten einen (vorzugsweise digitalen) Zeitzähler, also ein Bauteil, das dazu eingerichtet ist, gleichmäßige Zeitintervalle zu zählen. Schließlich umfasst ein erfindungsgemäßer Sensorknoten mindestens eine Empfangseinheit zum Empfangen drahtlos übermittelter Signale sowie eine Sendeeinheit.

Zur besseren Unterscheidbarkeit wird im Folgenden der zum Sensorknoten gehörige Zeitzähler als "Knoten-Zeitzähler", die Empfangseinheit des Sensorknotens als "Knoten-Empfangseinheit" und die Sendeeinheit des Sensorknotens als "Knoten-Sendeeinheit" bezeichnet.

Der Sensorknoten ist dazu eingerichtet, mittels der Knoten-Empfangseinheit nacheinander drahtlos übermittelte Signale zu erfassen. Sofern ein derartiges Signal vorgegebene Informationen enthält, wird der Knoten-Zeitzähler von einem vorgegebenen Anfangswert (insbesondere einem Nullwert) neu gestartet. Wie weiter unten erläutert wird, dienen diese Signale damit zur Synchronisation des Sensorknotens mit einer Basisstation und/oder anderen Knoten eines Sensornetzwerks. Aus diesem Grunde werden die genannten Signale im Weiteren auch als "Synchronisationssignale" bezeichnet.

Der Sensorknoten ist weiterhin dazu eingerichtet, mittels seines mindestens einen Sensors jeweilige Messwerte zu erfassen. Diese können dann jeweils zusammen mit einem zugehörigen, beim Erfassen aktuellen Zählerwert des Knoten-Zeitzählers als jeweilige Messignale mittels mindestens der Knoten-Sendeeinheit versandt werden:
Der Sensorknoten ist also dazu eingerichtet, die jeweils erfassten Messwerte und die zugehörigen Messzeiten (in Form des jeweils aktuellen Zählerwerts) an eine andere Einheit, insbesondere einen anderen Knoten und/oder an eine Basisstation des Sensornetzwerks zu übermitteln. Vorzugsweise umfassen die Messsignale dabei zudem jeweils ein Identifikationskennzeichen des Sensorknotens.

Die Erfindung ist die mindestens eine Knoten-Sendeeinheit dazu eingerichtet, Signale drahtlos zu versenden. Sie umfasst erfindugsgemäß einen Hochfrequenzsender (z.B. Schmalband- oder Ultrabreitbandsender) und/oder einen Infrarotsender.

Ein erstes erfindungsgemäßes Verfahren dient einer Zeitstempelung von in einem Sensornetzwerk erfassten Messdaten. Es umfasst ein Empfangen eines Synchronisationssignals (also eines Signals mit einer entsprechenden vorbestimmten Information) durch einen Sensorknoten des Sensornetzwerks (insbesondere mittels einer Knoten-Empfangseinheit des Sensorknotens). In Reaktion auf das empfangene Synchronisationssignal wird dann ein (vorzugsweise digitaler) Knoten-Zeitzähler des Sensorknotens von einem vorgegebenen Anfangswert (insbesondere von Null) an neu gestartet.

Das Verfahren umfasst weiter ein Erfassen mindestens eines Messwertes durch mindestens einen Sensor des Sensorknotens sowie ein Übermitteln eines Messsignals durch den Sensorknoten. Das Messsignal umfasst dabei den mindestens einen erfassten Messwert und einen bei dessen Erfassen aktuellen Zählerwert des (neu gestarteten) Knoten-Zeitzählers; gemäß vorteilhaften Ausführungsformen umfasst das Messsignal zudem ein Identifikationskennzeichen des Sensorknotens. Insbesondere dient ein erfindungsgemäßes Verfahren zur Zeitstempelung von Messdaten, die ein Sensor eines erfindungsgemäßen Sensorknoten in einem Sensornetzwerk erfasst, und dieses Verfahren kann von einem erfindungsgemäßen Sensorknoten ausgeführt werden.

Das Auslösen eines Neustarts des Knoten-Zeitzählers mittels eines Synchronisationssignals ermöglicht (bei einem erfindungsgemäßen Sensorknoten sowie einem erfindungsgemäßen Verfahren zur Zeitstempelung) zum einen das gezielte Setzen des Knoten-Zeitzählers auf seinen Anfangswert (z.B. den Nullwert) und damit eine Synchronisation, die durch ein das Synchronisationssignal initiierendes Bauteil (wie beispielsweise eine Basisstation des Sensornetzwerks) ausgelöst werden kann. Darüber hinaus bewirkt das Neustarten, dass der in einem Messsignalen jeweils enthaltene, zum mindestens einen erfassten Messwert gehörige Zählerwert jeweils höchstens der Zeitspanne zwischen zwei derartigen Synchronisationssignalen entspricht. Auf unterschiedlichen Voraussetzungen und/oder Umgebungsbedingungen beruhende etwaige Abweichungen zwischen dem Knoten-Zeitzähler des Sensorknotens und einem Zeitzähler des initiierenden Bauteils (z.B. einer Basisstation) können sich also höchstens über die besagte Spanne zwischen zwei Synchronisationssignalen hinweg aufsummieren. Mit einer geeignet häufigen Übermittlung von Synchronisationssignalen kann der Fehler damit so klein gehalten werden, dass er unterhalb einer geforderten Schwelle bleibt.

Dadurch, dass ein erfindungsgemäßer Sensorknoten bzw. ein in einem erfindungsgemäßen Verfahren zur Zeitstempelung eingesetzter Sensorknoten auf eine lokale Software- oder Hardware-Uhr verzichten und zur Synchronisation bzw. Zeitstempelung ausschließlich einen einfachen (digitalen) Knoten-Zeitzähler verwenden kann, hat der Sensorknoten einen reduzierten Rechenbedarf und kann demgemäß robust mit geringem Aufwand hergestellt sein. Zudem können die Synchronisierungsinformationen als einfache Formate wie beispielsweise periodische Zeitzeichen realisiert werden.

Gemäß Ausführungsformen eines erfindungsgemäßen Sensorknotens bzw. eines erfindungsgemäßen Verfahrens zur Zeitstempelung umfasst die Knoten-Empfangseinheit des Sensorknotens mindestens ein photoelektrisches Element wie insbesondere einen Phototransistor und/oder eine Photodiode. Die Synchronisationssignale sind in diesem Falle jeweils Lichtsignale. Ein derartiges Lichtsignal kann optische Impulse wie insbesondere Infrarotlichtimpulse und/oder sichtbare Lichtimpulse umfassen.

Die Synchronisierung mittels eines photoelektrischen Elements erlaubt bei derartigen Ausführungsformen den vorteilhaften Verzicht auf eine komplexe Hardware-Schaltung zum Empfang eines Synchronisierungssignals. Da die erfindungsgemässe Knoten-Sendeeinheit wie oben erwähnt einen Hochfrequenzsender und/oder einen Infrarotsender umfasst, können mit Synchronisationssignalen in Form von Mustern von Impulsen sichtbaren Lichts Störungen vermieden werden, weil dann die mindestens eine Knoten-Sendeeinheit andere Übertragungskanäle nutzt (Hochfrequenz, beispielsweise Ultrabreitband-Frequenzbereiche oder Infrarot) als ein Lichtkommunikationssender, von dem die Synchronisationssignale ausgehen.

Gemäß vorteilhaften Ausführungsformen umfasst ein erfindungsgemäßer Sensorknoten bzw. ein in einem erfindungsgemäßen Verfahren zur Zeitstempelung eingesetzter Sensorknoten mindestens eine Solarzelle, die einfallendes Licht in Energie umwandelt und den Sensorknoten damit versorgt. Das Verfahren zur Zeitstempelung umfasst dann vorzugsweise ein Beleuchten der mindestens einen Solarzelle. In entsprechenden Ausführungsformen, bei denen - wie erwähnt - die Synchronisationssignale in Form von Lichtsignalen empfangen werden, kann das Verfahren insbesondere ein Beleuchten (auch) der Solarzelle und damit eine Energieversorgung des Sensorknotens mit Licht kombiniert mit der Übermittlung der Synchronisationssignale umfassen.

Eine derartige Solarzelle kann als zusätzliche Komponente des Sensorknotens ausgebildet sein. In Ausführungsvarianten, bei denen die mindestens eine Knoten-Empfangseinheit mindestens ein photoelektrisches Element umfasst, kann (alternativ oder zusätzlich zu einer separaten Solarzelle) dieses selbst auch als Solarzelle zur Energieversorgung ausgebildet bzw. nutzbar sein.

Die Messsignale mit den enthaltenen Zählerwerten (und damit Messzeiten) ermöglichen einer geeigneten empfangenden Einheit, den Messwerten jeweilige Erfassungszeiten in Bezug auf eine Referenzzeit der empfangenden Einheit zuzuordnen. Insbesondere ist eine erfindungsgemäße Basisstation hierzu in der Lage:
Eine erfindungsgemäße Basisstation dient dazu, in einem Sensornetzwerk einen oder mehrere Sensorknoten zu kontrollieren bzw. koordinieren. Sie umfasst mindestens einen Sender zum drahtlosen Aussenden von Synchronisationssignalen, eine Referenzuhr und mindestens eine Empfangseinheit zum Empfangen von Messsignalen.

Zur besseren Unterscheidbarkeit werden der genannte mindestens eine Sender der Basisstation im Folgenden als "Basis-Sender" und die mindestens eine Empfangseinheit der Basisstation als "Basis-Empfangseinheit" bezeichnet.

Die Basisstation ist dazu eingerichtet, mittels des mindestens einen Basis-Senders Synchronisationssignale auszusenden. Die Basisstation ist weiterhin dazu eingerichtet, mittels ihrer mindestens einen Basis-Empfangseinheit Messsignale zu empfangen, die jeweils mindestens einen erfassten Messwert sowie einen zugehörigen (im Messignal also mit dem mindestens einen Messwert verknüpften) Zählerwert umfassen. Aus derart empfangenen Messsignalen (insbesondere den empfangenen Zählerzeiten) sowie aus einer jeweiligen Synchronisationszeit in Bezug auf die Referenzuhr (also einer Referenzuhr-Zeit, zu der das dem Messignal jeweils zugrundeliegende Synchronisationssignal durch den Basis-Sender versandt wurde) kann die Basisstation eine jeweilige Erfassungszeit (also eine Zeit, zu der der mindestens eine Messwert erfasst wurde) in Bezug auf eine Referenzuhrzeit bestimmen.

Optional kann eine erfindungsgemäße Basisstation zusätzlich zur Referenzuhr mindestens einen (vorzugsweise digitalen) Zeitzähler umfassen (also ein Bauteil, das dazu eingerichtet ist, gleichmäßige Zeitintervalle zu zählen); ein solcher Zeitzähler wird im Folgenden zur besseren Unterscheidbarkeit von den Knoten-Zeitzählern als "Basis-Zeitzähler" bezeichnet. Vorzugsweise ist die Basisstation bei derartigen Ausführungsformen dazu eingerichtet, den Basis-Zeitzähler beim Aussenden der Synchronisationssignale jeweils von einem vorgegebenen Startwert (insbesondere vom Nullwert) an neu zu starten. Ein derartiger Basis-Zeitzähler kann dann von der Basisstation insbesondere als Taktgeber zum Auslösen der Synchronisationssignale verwendet werden und/oder dazu, aus einer jeweils aktuellen Referenzzeit eine zurückliegende Synchronisationszeit in Bezug auf die Referenzuhr zu berechnen.

Im letzteren Fall kann auf ein Speichern der jeweiligen Synchronisationszeit (der Referenzzeit bei einer Synchronisierungsoperation) verzichtet werden, was einen reduzierten Aufwand auf Seiten der Basisstation bedeuten kann.

Vorzugsweise erfolgt die Bestimmung der Erfassungszeit jeweils unter Berücksichtigung einer jeweiligen Übertragungslaufzeit der Synchronisationssignale und/oder sonstiger technisch bedingter Verzögerungen (wie beispielsweise eine Verzögerung auf Seiten eines Sensorknotens zwischen dem Empfang eines Synchronisationssignals und einem Neustarten eines zugehörigen Knoten-Zeitzählers). Diese Zeiten können als Bauteildaten und/oder Erfahrungswerte gespeichert und von der Basisstation bei der Bestimmung herangezogen werden.

Die erfindungsgemäße Basisstation umfasst der Basis-Sender einen Lichtkommunikationssender zum Aussenden von Lichtsignalen. Die Synchronisationssignale sind dann vorzugsweise jeweils Lichtsignale; diese können im sichtbaren und/oder im nicht sichtbaren Frequenzbereich liegen, insbesondere können sie Infrarotsignale umfassen.

Ein derartiger Lichtkommunikationssender kann direkt an einer Steuerungselektronikeinheit der Basisstation angeordnet oder mit einer solchen über ein Kabel verbunden sein. Die letztgenannte Variante ist insbesondere vorteilhaft, wenn die Basisstation mehrere Lichtkommunikationssender umfasst, weil diese einerseits sicher und störungsfrei Signale der Basisstation empfangen und andererseits voneinander beabstandet und gemäß jeweiligen räumlichen Konstellationen angeordnet werden können, insbesondere so, dass ihr Licht auf jeweilige Sensorknoten des Sensornetzwerks ausgerichtet ist.

Eine Synchronisierung mittels Lichtsignalen erlaubt dabei zudem ein gleichzeitiges Synchronisieren von verschiedenen Arten von Sensorknoten durch eine erfindungsgemäße Basisstation, beispielsweise von mindestens einem Sensorknoten mit Hochfrequenzsender, mindestens einem Sensorknoten mit Infrarotsender und/oder mindestens einem Sensorknoten, der dazu eingerichtet ist, kabelgebunden Messignale an die Basisstation zu senden.

Erfindugsgemäß umfasst die Basisstation als mindestens eine Basis-Empfangseinheit einen Empfänger von Hochfrequenzsignalen und/oder als mindestens eine Basis-Empfangseinheit einen Empfänger von Infrarotsignalen. Insbesondere in Ausführungsformen, bei denen die Synchronisationssignale Muster von Impulsen sichtbaren Lichts umfasst, werden damit Störungen vermieden, weil dann der Sender, von dem die mindestens eine Basis-Empfangseinheit Daten empfangen kann, andere Übertragungskanäle nutzt als der Lichtkommunikationssender.

Ein erfindungsgemäßes Sensornetzwerk dient der Erfassung von Messdaten. Es umfasst mindestens eine Basisstation gemäß einer Ausführungsform der vorliegenden Erfindung sowie mindestens einen erfindungsgemäßen Sensorknoten gemäß einer Ausführungsform. Die mindestens eine Basisstation und der mindestens eine Sensorknoten sind dabei (hinsichtlich ihrer Sende- bzw. Empfangseigenschaften) so aufeinander eingestellt, dass die Knoten-Empfangseinheit des mindestens einen Sensorknotens vom Basis-Sender der Basisstation ausgesandte Synchronisationssignale (direkt oder unter Ausnutzung von Reflexion) empfangen kann (bzw. empfängt) sowie dass die Basis-Empfangseinheit der Basisstation Messsignale empfangen kann (bzw. empfängt), wenn diese von mindestens einer Knoten-Sendeeinheit mindestens eines der Sensorknoten versandt werden.

Das Sensornetzwerk kann mindestens ein Reflexionsmedium wie beispielsweise einen Spiegel und/oder eine reflektierenden Folie (z.B. eine Multilayer-Isolierfolie (MLI)) umfassen, das dazu eingerichtet ist, vom Lichtkommunikationssender ausgesandte Synchronisationssignale auf das photoelektrische Element und/oder ein ggf. zusätzlich umfasste Solarzelle zu reflektieren: Die bei einer derartigen Reflexion auftretende Signalverzögerung ist aufgrund der geringen realisierbaren Distanzen vernachlässigbar.

In einem erfindungsgemäßen Sensornetzwerk umfassen der Basis-Sender einen Lichtkommunikationssender und eine Knoten-Empfangseinheit mindestens eines der Sensorknoten ein photoelektrisches Element. Vorzugsweise umfasst der mindestens eine Sensorknoten darüber hinaus mindestens eine Solarzelle. Der Lichtkommunikationssender ist dann vorzugsweise dazu eingerichtet, die mindestens eine Solarzelle des mindestens einen Sensorknotens zu beleuchten. So kann der Lichtkommunikationssender den mindestens einen Sensorknoten zusätzlich mit Energie versorgen.

Ein erfindungsgemäßes Sensornetzwerk kann insbesondere mehrere Sensorknoten mit unterschiedlichen Typen von Knoten-Sendeeinheiten umfassen. Beispielsweise kann ein erfindungsgemäßes Sensornetzwerk mindestens einen Sensorknoten umfassen, dessen Knoten-Sendeeinheit einen Hochfrequenzsender umfasst, sowie mindestens einen Sensorknoten, dessen Knoten-Sendeeinheit einen Infrarotsender umfasst. Beide Typen von Sensorknoten können dann gleichzeitig und unter Einbindung von Bauteilen lediglich geringer Komplexität und bei niedrigem Energieaufwand synchronisiert werden.

Ein (zweites) erfindungsgemäßes Verfahren dient einer Synchronisation von Sensorknoten eines Sensornetzwerks. Es umfasst ein Übermitteln eines Synchronisationssignals durch eine Basisstation des Sensornetzwerks an mindestens einen Sensorknoten des Sensornetzwerks. Das Verfahren umfasst weiterhin das Durchführen eines erfindungsgemäßen Verfahrens zur Zeitstempelung gemäß einer Ausführungsform der vorliegenden Erfindung durch den mindestens einen Sensorknoten. Das dabei übermittelte Messsignal (mit dem mindestens einen Messwert sowie dem bei dessen Erfassen aktuellen Zählerwert des Sensor-Zeitzählers des Sensorknotens) wird von der Basisstation empfangen. Diese bestimmt daraus und aus einer jeweiligen Synchronisationszeit in Bezug auf die Referenzuhr eine Erfassungszeit, zu der der mindestens eine im Messsignale enthaltene Messwert erfasst wurde, in Bezug auf eine Referenzuhr der Basisstation. Die Synchronisationszeit in Bezug auf die Referenzuhr kann vorgegeben sein (so dass das Versenden der Synchronisationssignale zu diesen vorgegbenen Zeiten erfolgt), beim Senden der Synchronisationssignale jeweils gespeichert werden oder - wie oben erwähnt - mittels eines ggf. vorhandenen Basis-Zeitzählers bestimmt werden; im letzteren Fall umfasst das Verfahren vorzugsweise ein Neustarten des Basis-Zeitzählers von einem vorgegebenen Startwert bei Übermitteln des Synchronisationssignals. Vorzugsweise erfolgt das Bestimmen der Erfassungszeit unter Berücksichtigung technisch bedingter Verzögerungen wie insbesondere einer Signallaufzeit und Verarbeitungszeit des Synchronisationssignals.

Das Verfahren zur Synchronisation kann insbesondere durch ein erfindungsgemäßes Sensornetzwerk gemäß einer der in dieser Schrift offenbarten Ausführungsformen ausgeführt werden.

2. Erfindungsgemäß wird das Synchronisationssignal in Form eines Lichtsignals und durch einen Lichtkommunikationssender der Basisstation übermittelt und von mindestens einem photoelektrischen Element des mindestens einen Sensorknotens empfangen. Der Sensorknoten kann zudem mindestens eine Solarzelle zu seiner Energieversorgung umfassen, und das Verfahren kann dann ein Beleuchten der Solarzelle durch den Lichtkommunikationssender umfassen.

Erfindungsgemäß wird J 2 das jeweilige Messsignal durch den/die Sensorknoten in Form von Hochfrequenz- und/oder Infrarotsignalen übermittelt.

Insbesondere sind ein erfindungsgemäßes Sensornetzwerk und ein erfindungsgemäßes Verfahren zur Synchronisierung somit besonders geeignet, in einem Raumflugkörper eingesetzt zu werden: Gemäß speziellen Ausführungsbeispielen der vorliegenden Erfindung ist ein erfindungsgemäßes Sensornetzwerk in einem Raumflugkörper installiert bzw. wird ein erfindungsgemäße Verfahren zur Synchronisation von Sensorknoten eines Sensornetzwerks in einem Raumflugkörper ausgeführt. Der Raumflugkörper kann jeweils insbesondere eine Rakete, speziell die Oberstufe einer Mehrstufenrakete sein.

Im Folgenden werden bevorzugte Ausführungsbeispiele der Erfindung anhand einer Zeichnung näher erläutert. Es versteht sich, dass einzelne Elemente und Komponenten auch anders kombiniert werden können als dargestellt.

Es zeigt schematisch:

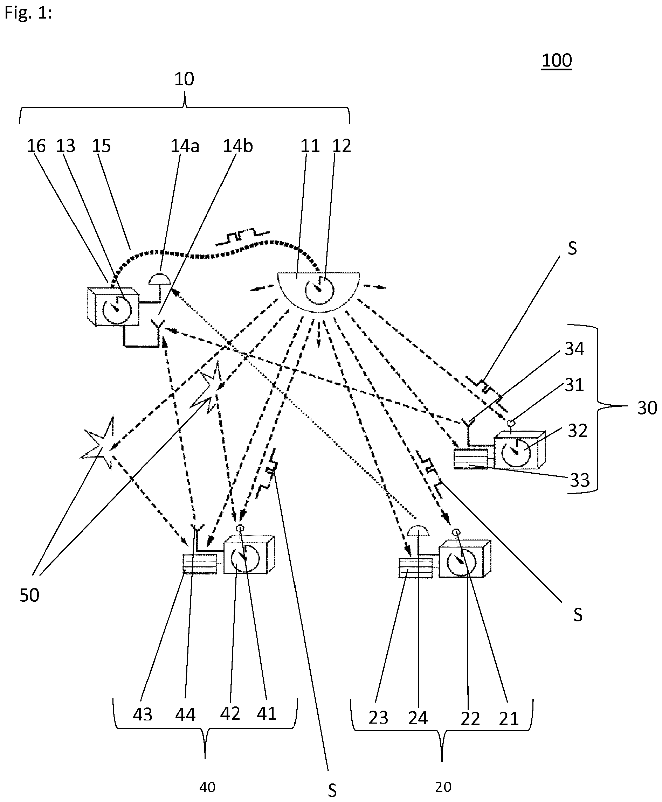

Figur 1: eine exemplarische Ausführungsform eines erfindungsgemäßen Sensornetzwerks.

In Figur 1 ist ein Ausführungsbeispiel eines erfindungsgemäßen Sensornetzwerks 100 schematisch dargestellt. Das Sensornetzwerk 100 umfasst eine erfindungsgemäße Basisstation 10, drei erfindungsgemäße Sensorknoten 20, 30, 40 sowie zwei Reflexionsmedien 50.

Die erfindungsgemäßes Basisstation 10 umfasst einen Basis-Sender 11 zum drahtlosen Aussenden von Synchronisationssignalen S, beispielsweise in einer regelmäßigen Abfolge (zum Synchronisieren der Sensorknoten in gleichmäßigen Zeitabständen) oder ausgelöst jeweils durch ein vorgegebenes Ereignis. Der Basis-Sender 11 ist vorzugsweise als ein Lichtkommunikationssender ausgebildet. Das von ihm ausgesandte Licht, insbesondere die Synchronisationssignale S liegt/liegen dabei bevorzugt im sichtbaren Frequenzspektrum.

Der Basis-Sender 11 ist vorliegend über ein Kabel 15 mit einer Steuerungselektronikeinheit 16 der Basisstation verbunden. Die Kabelverbindung von Steuerungselektronik 16 und Basis-Sender 11 ermöglicht einerseits eine einfache Kommunikation der beiden Elemente (ohne Störung anderer Kanäle) und erlaubt andererseits, den Basis-Sender 11 entsprechend den jeweiligen räumlichen Gegebenheiten geeignet so in Bezug auf die Sensorknoten anzuordnen, dass sein Licht die Sensorknoten 20, 30, 40 (bzw. deren mindestens eine Knoten-Empfangseinheit 21, 31, 41 und/oder mindestens eine Solarzelle 23, 33, 43) jeweils direkt oder nach Reflexion an mindestens einem der Reflexionsmedien 50 erreicht. Dabei kann die Steuerungselektronikeinheit 16 an einer anderen geeigneten Stelle positioniert werden. Insbesondere kann die Steuerungselektronikeinheit mit weiteren (nicht dargestellten) Basis-Sendern verbunden sein, die beispielsweise an einer anderen Position jeweilige (nicht gezeigte) weitere Sensorknoten mit ihrem Licht erreichen. Außerdem ermöglicht die Kabelverbindung von Steuerungselektronik 16 und Basis-Sender 11 mittels Kabel 15 eine elektrische Energieversorgung des Basis-Senders 11 durch die Steuerungselektronik 16.

Die Basisstation 10 weist weiterhin eine Referenzuhr 13 auf, die eine fortlaufende Referenzzeit für das Sensornetzwerk 100 misst.

Darüber hinaus umfasst die Basisstation 10 im gezeigten Beispiel einen Basis-Zeitzähler 12, der vorliegend am Basis-Sender 11 angeordnet ist. Der Basis-Zeitzähler kann dabei als Taktgeber zum Aussenden der Synchronisationssignale durch den Basis-Sender 11 fungieren. Die Basisstation 10 ist vorzugsweise dazu eingerichtet, den Basis-Zeitzähler 12 mit Versenden von Synchronisationssignalen S an die Sensorknoten 20, 30, 40 jeweils neu von einem vorgegebenen Startwert zu starten.

Die Synchronisationszeit in Bezug auf die Referenzuhr kann jeweils beim Versenden eines Synchronisationssignals gespeichert werden; in alternativen Ausführungsformen können die Synchronisationssignale zu vorgegebenen (gespeicherten) Referenzzeiten versandt werden; zum Bestimmen der Erfassungszeit kann die Basisstation 10 dann die Synchronisationszeit aus einem zugehörigen Speicher auslesen. Alternativ kann die Basisstation dazu eingerichtet sein, die Synchronisationszeit aus einer jeweils aktuellen Zeit der Referenzuhr und einem aktuellen Zählerwert des Basis-Zeitzählers zu berechnen.

Weiterhin umfasst die Basisstation 10 vorliegend zwei Basis-Empfangseinheiten 14a, 14b, mit denen die Basisstation drahtlose Signale, insbesondere von den Sensorknoten 20, 30, 40 drahtlos versandte Messsignale empfangen kann.

Die Basis-Empfangseinheit 14a ist dabei vorliegend als Infrarotempfänger ausgebildet, der insbesondere entsprechende Signale von der als Infrarotsender ausgebildeten Knoten-Sendeeinheit 24 des Sensorknotens 20 empfangen (und an die Steuerungselektronikeinheit 16 weiterleiten) kann. Die Basis-Empfangseinheit 14b ist im dargestellten Ausführungsbeispiel ein Ultrabreitbandempfänger, mittels dessen die Basisstation 10 insbesondere entsprechende Radiosignale von als Ultrabreitbandsender ausgebildeten Knoten-Sendeeinheiten 34, 44 der Sensorknoten 30, 40 empfangen kann. Die verschiedenen Übertragungswege der Signale sind in der Figur jeweils schematisch durch entsprechende Pfeile dargestellt.

Die erfindungsgemäßen Sensorknoten 20, 30, 40 umfassen jeweils mindestens einen (in der Figur nicht dargestellten) Sensor zur Messung einer jeweiligen Messgröße wie beispielsweise einer Umgebungstemperatur und/oder -feuchtigkeit, eines Umgebungsdrucks, einer Umgebungshelligkeit, einer Dehnung, einer Vibration oder einer Beschleunigung.

Darüber hinaus weisen die Sensorknoten 20, 30, 40 jeweils eine Knoten-Empfangseinheit 21, 31, 41 zum Empfangen drahtlos übermittelter Synchronisationssignale S auf. Im vorliegend dargestellten Ausführungsbeispiel umfassen die Knoten-Empfangseinheiten 21, 31, 41 jeweils mindestens ein photoelektrisches Element (beispielsweise mindestens eine Photodiode und/oder mindestens einen Phototransistor), so dass sie die Synchronisationssignale S als von dem als Lichtkommunikationssender ausgebildeten Basis-Sender 11 übermittelte Lichtsignale empfangen können.

Die Sensorknoten 20, 30, 40 umfassen ferner jeweilige Knoten-Zeitzähler 22, 32, 42. Wenn ein Synchronisationssignal S vom jeweiligen Sensorknoten (bzw. dessen Knoten-Empfangseinheit 21, 31, 41) empfangen wird, werden die Knoten-Zeitzähler jeweils von einem vorgegebenen Anfangswert an neu gestartet.

Zu ihrer Energieversorgung umfassen die Sensorknoten 20, 30, 40 weiterhin jeweils mindestens eine Solarzelle 23, 33, 43, die ebenfalls durch vom Basis-Sender 11 ausgehendes Licht beleuchtet werden kann und die das Licht dann jeweils in elektrische Energie umwandelt.

Schließlich umfassen die Sensorknoten 20, 30, 40 jeweils eine Knoten-Sendeeinheit 24, 34, 44, mittels deren sie jeweilige Messsignale an eine entsprechende Basis-Empfangseinheit 14a, 14b senden können. Im vorliegenden Ausführungsbeispiel ist die Knoten-Sendeeinheit 24 des Sensorknotens 20 als Infrarotsender ausgebildet, der demgemäß Infrarotsignale an die als Infrarotempfänger ausgebildete Basis-Empfangseinheit 14a senden kann. Die Knoten-Sendeeinheiten 34, 44 der Sensorknoten 30, 40 sind vorliegend als Ultrabreitbrandsender ausgebildet. Ihre Signale können von der Basisstation 10 mittels deren als Ultrabreitbandempfänger ausgestalteter Basis-Empfangseinheit 14b empfangen werden.

Die von den Sensorknoten 20, 30, 40 versandten Messsignale umfassen erfindungsgemäß jeweils mindestens einen vom mindestens einen Sensor des Sensorknotens erfassten Messwert mit einem zugehörigen, bei Erfassen des Messwerts aktuellen Zählerwert des Knoten-Zeitzählers 22, 32, 42 des jeweiligen Sensorknotens. Der Zählerwert gibt also jeweils die lokale Messzeit in Bezug auf den Knoten-Zeitzähler 22, 32, 42 (also seit der jeweils letzten Synchronisierung) an, zu der der jeweilige Messwert erfasst wurde.

Da der in dem Messignal enthaltene Zählerwert des Knoten-Zeitzählers 22, 32, 42 eine ab der letzten Synchronisation gezählte Erfassungszeit für den zugehörigen Messwert angibt, kann die Basisstation 10 aus einer Referenzzeit der letzten Synchronisation (d.h. einer Synchronisationszeit in Bezug auf die Referenzuhr) und dem mit dem Messignal erhaltenen Zählerwert des Knoten-Zeitzählers die Erfassungszeit des mindestens einen Messwerts in Bezug auf die Zeit der Referenzuhr 13 bestimmen. Vorzugsweise werden dabei zusätzlich etwaige technisch bedingte Verzögerungen wie insbesondere eine Übertragungslaufzeit und Verarbeitungszeit des Synchronisationssignals S im Sensorkonten 20,30,40 berücksichtigt.

Insbesondere kann die Basisstation 10 zu empfangenen Messwerten somit jeweils eine Erfassungszeit in Bezug auf eine Zeit der Referenzuhr 13 ermitteln. Da die Referenzuhr eine das Sensornetzwerk übergreifende (globale) Referenzzeit misst, kann das Sensornetzwerk 100 damit synchronisiert operieren.

Ein erfindungsgemäßer Sensorknoten 20, 30, 40 für ein Sensornetzwerk 100 umfasst mindestens einen Sensor, mindestens eine Knoten-Empfangseinheit 21, 31, 41, einen Knoten-Zeitzähler 22, 32, 42 und mindestens eine Knoten-Sendeeinheit 24, 34, 44. Eine erfindungsgemäße Basisstation 10 für ein Sensornetzwerk 100 umfasst mindestens einen Basis-Sender 11 zum drahtlosen Aussenden von Synchronisationssignalen S, eine Referenzuhr 13 sowie mindestens eine Basis-Empfangseinheit 14a, 14b. Der Knoten-Zeitzähler 22, 32, 42 wird jeweils mit Empfang eines Synchronisationssignals neu gestartet. Vom Sensorknoten versandte bzw. von der Basisstation empfangene Messignale umfassen jeweils mindestens einen erfassten Messwert mit einem zugehörigen, beim Erfassen aktuellen Zählerwert Knoten-Zeitzählers 22, 32, 42. Daraus ermittelt die Basisstation eine jeweilige Erfassungszeit der Messwerte in Bezug auf die Referenzuhr 13.

Offenbart sind ferner ein Sensornetzwerk 100, ein Verfahren zur Zeitstempelung und ein Verfahren zur Synchronisation von Sensorknoten eines Sensornetzwerks 100.

### Bezugszeichen

10 Basisstation
11 Basis-Sender
12 Basis-Zeitzähler
13 Referenzuhr
14a, 14b Basis-Empfangseinheit
15 Kabel
16 Steuerungselektronik
20, 30, 40 Sensorknoten
21, 31, 41 Knoten-Empfangseinheit
22, 32, 42 Knoten-Zeitzähler
23, 33, 43 Solarzelle
24, 34, 44 Knoten-Sendeeinheit
50 Reflexionsmedium
100 Sensornetzwerk
S Synchronisationssignal

## Patentansprüche

1. Sensorknoten (20, 30, 40) für ein Sensornetzwerk (100), wobei der Sensorknoten mindestens einen Sensor, mindestens eine Knoten-Empfangseinheit (21, 31, 41), einen Knoten-Zeitzähler (22, 32, 42) sowie mindestens eine Knoten-Sendeeinheit (24, 34, 44) umfasst und dazu eingerichtet ist,
- mittels der Knoten-Empfangseinheit (21, 31, 41) drahtlos übermittelte Synchronisationssignale (S) zu empfangen und daraufhin jeweils den Knoten-Zeitzähler (22, 32, 42) von einem vorgegebenen Anfangswert neu zu starten,
- mittels des mindestens einen Sensors jeweilige Messwerte zu erfassen sowie
- mittels der mindestens einen Knoten-Sendeeinheit (24, 34, 44) Messignale zu versenden, die jeweils mindestens einen erfassten Messwert mit einem zugehörigen, beim Erfassen aktuellen Zählerwert des Knoten-Zeitzählers (22, 32, 42) umfassen,
**dadurch gekennzeichnet, dass**
- die Knoten-Empfangseinheit (21, 31, 41) zum Empfang der Synchronisationssignale mindestens ein photoelektrisches Element umfasst und die Synchronisationssignale jeweils Lichtsignale sind und
- die mindestens eine Knoten-Sendeeinheit (24, 34, 44) zum Senden der Messsignale einen Hochfrequenzsender und/oder einen Infrarotsender umfasst.

2. Sensorknoten gemäß Anspruch 1, der zudem mindestens eine Solarzelle (23, 33, 43) zu seiner Energieversorgung umfasst.

3. Basisstation (10) für ein Sensornetzwerk (100), wobei die Basisstation mindestens einen Basis-Sender (11) zum drahtlosen Aussenden von Synchronisationssignalen (S), eine Referenzuhr (13) sowie mindestens eine Basis-Empfangseinheit (14a, 14b) zum Empfangen von Messsignalen umfasst und dazu eingerichtet ist,
- über den Basis-Sender (11) Synchronisationssignale (S) drahtlos zu übermitteln;
- mittels der mindestens einen Basis-Empfangseinheit (14a, 14b) Messsignale zu empfangen, die jeweils mindestens einen erfassten Messwert sowie einen zugehörigen Zählerwert umfassen, und
- aus einem in einem jeweils empfangenen Messsignal enthaltenen, zu einem vom Messsignal umfassten Messwert gehörigen Zählerwert sowie aus einer Synchronisationszeit in Bezug auf die Referenzuhr (13) eine Erfassungszeit, zu der der Messwert erfasst wurde, in Bezug auf eine Zeit der Referenzuhr (13) zu bestimmen,
**dadurch gekennzeichnet, dass**
- der mindestens eine Basis-Sender (11) einen Lichtkommunikationssender zum Aussenden von Lichtsignalen umfasst und die Synchronisationssignale (S) jeweils Lichtsignale sind, die vom Lichtkommunikationssender ausgesendet werden, und
- die mindestens eine Basis-Empfangseinheit (14a, 14b) zum Empfang des Messsignales einen Hochfrequenzempfänger und/oder einen Infrarotempfänger umfasst.

4. Basisstation gemäß Anspruch 3, wobei das Bestimmen der Erfassungszeit unter Berücksichtigung einer Übertragungslaufzeit und/oder Verarbeitungszeit des jeweils empfangenen Synchronisationssignals erfolgt.

5. Sensornetzwerk (100) zur Erfassung von Messdaten, wobei das Sensornetzwerk mindestens einen Sensorknoten (20, 30, 40) nach einem der Ansprüche 1 oder 2 sowie eine Basisstation (10) gemäß einem der Ansprüche 3 oder 4 umfasst, die so aufeinander eingestellt sind,
- dass die Knoten-Empfangseinheit (21, 31, 41) des mindestens einen Sensorknotens (20, 30, 40) vom Basis-Sender (11) der Basisstation (10) ausgesandte Synchronisationssignale (S) empfangen kann und
- dass die mindestens eine Basis-Empfangseinheit (14a, 14b) der Basisstation (10) von mindestens einer Knoten-Sendeeinheit (24, 34, 44) mindestens eines der Sensorknoten (20, 30, 40) versandte Messsignale empfangen kann.

6. Sensornetzwerk gemäß Anspruch 5, wobei die Knoten-Empfangseinheit (21, 31, 41) des mindestens einen Sensorknotens (20, 30, 40) ein photoelektrisches Element umfasst und der Basis-Sender (11) der Basisstation (10) einen Lichtkommunikationssender zum Aussenden von Lichtsignalen, und wobei das Sensornetzwerk zudem mindestens ein Reflexionsmedium (50) umfasst, das dazu eingerichtet ist, vom Lichtkommunikationssender ausgesandte Synchronisationssignale (S) auf das photoelektrische Element des mindestens einen Sensorknotens zu reflektieren.

7. Verfahren zur Zeitstempelung von Messdaten in einem Sensornetzwerk (100), wobei das Verfahren umfasst:
- Empfangen eines Synchronisationssignals (S) durch einen Sensorknoten (20, 30, 40) des Sensornetzwerks (100) und daraufhin Neustarten eines Knoten-Zeitzählers (22, 32, 42) des Sensorknotens von einem vorgegebenen Anfangswert an;
- Erfassen mindestens eines Messwertes durch mindestens einen Sensor des Sensorknotens (20, 30, 40);
- Übermitteln eines Messsignals durch den Sensorknoten, wobei das Messsignal den mindestens einen erfassten Messwert und einen bei dessen Erfassen aktuellen Zählerwert des Knoten-Zeitzählers umfasst,
**dadurch gekennzeichnet, dass**
das Synchronisationssignal (S) als Lichtsignal durch mindestens ein photoelektrisches Element des Sensorknotens (20, 30, 40) empfangen wird und das jeweilige Messsignal durch den/die Sensorknoten (20, 30, 40) in Form von Hochfrequenz- und/oder Infrarotsignalen übermittelt wird.

8. Verfahren zur Synchronisation von Sensorknoten eines Sensornetzwerks (100), wobei das Verfahren umfasst:
- Übermitteln eines Synchronisationssignals (S) durch eine Basisstation (10) des Sensornetzwerks an mindestens einen Sensorknoten (20, 30, 40) des Sensornetzwerks;
- Durchführen eines Verfahrens zur Zeitstempelung gemäß Anspruch 7 durch den mindestens einen Sensorknoten (20, 30, 40);
- Empfangen des jeweiligen Messignals durch die Basisstation (10) und
- Bestimmen einer Erfassungszeit, zu der der mindestens eine im Messignal enthaltene Messwert erfasst wurde, durch die Basisstation (10) und in Bezug auf eine Referenzuhr (13) der Basisstation, wobei das Bestimmen auf Grundlage des in mindestens einem empfangenen Messsignal enthaltenen, zu mindestens einem Messwert gehörigen Zählerwerts sowie einer Synchronisationszeit in Bezug auf die Referenzuhr (13) erfolgt.

9. Verfahren gemäß Anspruch 8, wobei das Synchronisationssignal (S) in Form des Lichtsignals durch einen Lichtkommunikationssender der Basisstation (10) übermittelt wird.

10. Verfahren gemäß einem der Ansprüche 8 oder 9, wobei das Bestimmen der Erfassungszeit unter Berücksichtigung einer Signallaufzeit und/oder Verarbeitungszeit des Synchronisationssignals (S) erfolgt.

11. Verfahren gemäß einem der Ansprüche 8 bis 10, das zudem ein Beleuchten mindestens einer Solarzelle (23, 33, 43) mindestens eines der Sensorknotens (20, 30, 40) durch den Lichtkommunikationssender zur Versorgung des mindestens einen Sensorknotens mit Energie umfasst.

## Claims

1. A sensor node (20, 30, 40) for a sensor network (100), the sensor node comprising at least one sensor, at least one node receiving unit (21, 31, 41), a node time counter (22, 32, 42) and at least one node transmission unit (24, 34, 44) and being set up
- to receive wirelessly transmitted synchronization signals (S) by means of the node receiving unit (21, 31, 41) and after that in each case to restart the node time counter (22, 32, 42) from a predetermined initial value,
- to capture respective measured values by means of the at least one sensor, and
- to send measurement signals by means of the at least one node transmission unit (24, 34, 44), which in each case comprise at least one captured measured value with an associated counter value of the node time counter (22, 32, 42), which is current at the time of capture,
**characterized in that**
- the node receiving unit (21, 31, 41) comprises at least one photoelectric element for receiving the synchronization signals and the synchronization signals are light signals in each case, and
- the at least one node transmission unit (24, 34, 44) comprises a high-frequency transmitter and/or an infrared transmitter for transmitting the measurement signals.

2. The sensor node according to Claim 1, which additionally comprises at least one solar cell (23, 33, 43) for its energy supply.

3. A base station (10) for a sensor network (100), the base station comprising at least one base transmitter (11) for wirelessly sending synchronization signals (S), a reference clock (13) and at least one base receiving unit (14a, 14b) for receiving measurement signals and being set up
- to transmit synchronization signals (S) wirelessly via the base transmitter (11);
- to receive measurement signals by means of the at least one base receiving unit (14a, 14b), which in each case comprise at least one captured measured value and an associated counter value, and
- to determine a capture time at which the measured value was captured with respect to a time of time of the reference clock (13) from a counter value, which is contained in a respectively received measurement signal and belongs to a measured value included by the measurement signal, and from a synchronization time with respect to the reference clock (13),
**characterized in that**
- the at least one base transmitter (11) comprises a light communication transmitter for sending light signals and the synchronization signals (S) are light signals in each case, which are sent by the light communication transmitter, and
- the at least one base receiving unit (14a, 14b) comprises a high-frequency receiver and/or an infrared receiver for receiving the measurement signal.

4. The base station according to Claim 3, wherein the determination of the capture time takes place whilst taking a transmission time and/or processing time of the respectively received synchronization signal into account.

5. A sensor network (100) for capturing measurement data, wherein the sensor network comprises at least one sensor node (20, 30, 40) according to either of Claims 1 and 2 and a base station (10) according to either of Claims 3 and 4, which are set up with respect to one another such
- that the node receiving unit (21, 31, 41) of the at least one sensor node (20, 30, 40) can receive synchronization signals (S) which are sent by the base transmitter (11) of the base station (10), and
- that the at least one base receiving unit (14a, 14b) of the base station (10) can receive measurement signals which are sent by at least one node transmission unit (24, 34, 44) of at least one of the sensor nodes (20, 30, 40).

6. The sensor network according to Claim 5, wherein the node receiving unit (21, 31, 41) of the at least one sensor node (20, 30, 40) comprises a photoelectric element and the base transmitter (11) of the base station (10) comprises a light communication transmitter for sending light signals, and wherein the sensor network additionally comprises at least one reflective medium (50) which is set up to reflect synchronization signals (S) which are sent by the light communication transmitter onto the photoelectric element of the at least one sensor node.

7. A method for time stamping measurement data in a sensor network (100), the method comprising:
- receiving a synchronization signal (S) by means of a sensor node (20, 30, 40) of the sensor network (100) and after that restarting a node time counter (22, 32, 42) of the sensor node from a predetermined initial value;
- capturing at least one measured value by means of at least one sensor of the sensor node (20, 30, 40) ;
- transmitting a measurement signal by means of the sensor node, the measurement signal comprising the at least one captured measured value and a counter value of the node time counter which is current at the time of its capture,
**characterized in that**
the synchronization signal (S) is received as a light signal by at least one photoelectric element of the sensor node (20, 30, 40) and the respective measurement signal is transmitted by the sensor node(s) (20, 30, 40) in the form of high-frequency and/or infrared signals.

8. A method for synchronizing sensor nodes of a sensor network (100), wherein the method comprises:
- transmitting a synchronization signal (S) by means of a base station (10) of the sensor network to at least one sensor node (20, 30, 40) of the sensor network;
- carrying out a method for time stamping according to Claim 7 by means of the at least one sensor node (20, 30, 40);
- receiving the respective measurement signal by means of the base station (10), and
- determining a capture time at which the at least one measured value contained in the measurement signal was captured by means of the base station (10) and with respect to a reference clock (13) of the base station, wherein the determination takes place on the basis of the counter value, which is contained in at least one received measurement signal and belongs to at least one measured value, and a synchronization time with respect to the reference clock (13).

9. The method according to Claim 8, wherein the synchronization signal (S) is transmitted in the form of the light signal by means of a light communication transmitter of the base station (10).

10. The method according to either of Claims 8 and 9, wherein the determination of the detection time takes place whilst taking a signal transmission time and/or processing time of the synchronization signal (S) into account.

11. The method according to one of Claims 8 to 10, which additionally comprises illuminating at least one solar cell (23, 33, 43) of at least one of the sensor nodes (20, 30, 40) by means of the light communication transmitter to supply the at least one sensor node with energy.

## Revendications

1. Noeud de détection (20, 30, 40) pour un réseau de détecteurs (100), sachant que le noeud de détection comprend au moins un détecteur, au moins une unité de réception de noeud (21, 31, 41), un compteur de temps de noeud (22, 32, 42) ainsi qu'au moins une unité d'émission de noeud (24, 34, 44) et est agencé de manière à
- recevoir au moyen de l'unité de réception de noeud (21, 31, 41) des signaux de synchronisation (S) transmis sans fil et mettre à nouveau en marche après cela respectivement le compteur de temps de noeud (22, 32, 42) depuis une valeur initiale prédéfinie,
- saisir au moyen d'au moins un détecteur des valeurs de mesure respectives, et
- envoyer au moyen d'au moins une unité d'émission de noeud (24, 34, 44) des signaux de mesure, qui comprennent respectivement au moins une valeur de mesure saisie avec une valeur de compteur du compteur de temps de noeud (22, 32, 42) correspondante, actuelle lors de la saisie **caractérisé en ce que**
- l'unité de réception de noeud (21, 31, 41) comprend au moins un élément photoélectrique pour la réception des signaux de synchronisation et les signaux de synchronisation sont respectivement des signaux lumineux, et
- au moins une unité d'émission de noeud (24, 34, 44) comprend un émetteur à haute fréquence et/ou un émetteur infrarouge pour émettre les signaux de mesure.

2. Noeud de détection selon la revendication 1, qui comprend en outre au moins une cellule photovoltaïque (23, 33, 43) pour son alimentation en énergie.

3. Poste de base (10) pour un réseau de détecteurs (100), sachant que le poste de base comprend au moins un émetteur de base (11) pour l'émission sans fil de signaux de synchronisation (S), une horloge de référence (13) ainsi qu'au moins une unité de réception de base (14a, 14b) pour la réception de signaux de mesure et est agencée pour
- transmettre sans fil des signaux de synchronisation (S) par l'émetteur de base (11),
- recevoir des signaux de mesure au moyen d'au moins une unité de réception de base (14a, 14b), qui comprennent respectivement au moins une valeur de mesure saisie ainsi qu'une valeur de compteur correspondante, et
- déterminer un temps de saisie auquel la valeur de mesure a été saisie, par rapport à un temps de l'horloge de référence (13) à partir d'une valeur de compteur contenue dans un signal de mesure respectivement reçu, appartenant à une valeur de mesure comprise dans le signal de mesure ainsi qu'à partir d'un temps de synchronisation en référence à l'horloge de référence (13),
**caractérisé en ce qu'**
- au moins un émetteur de base (11) comprend un émetteur de communication lumineux pour l'émission de signaux lumineux et les signaux de synchronisation (S) sont respectivement des signaux lumineux, qui sont émis par l'émetteur de communication lumineux, et
- au moins une unité de réception de base (14a, 14b) pour la réception du signal de mesure comprend un récepteur à haute fréquence et/ou un récepteur infrarouge.

4. Poste de base selon la revendication 3, sachant que la détermination du temps de saisie a lieu en tenant compte d'un temps de durée de transmission et/ou d'un temps de traitement du signal de synchronisation respectivement reçu.

5. Réseau de détecteurs (100) pour la saisie de données de mesure, sachant que le réseau de détecteurs comprend au moins un noeud de détection (20, 30, 40) selon l'une quelconque des revendications 1 ou 2 ainsi qu'un poste de base (10) selon l'une quelconque des revendications 3 ou 4, qui sont ajustés l'un par rapport à l'autre de telle manière que
- l'unité de réception de noeud (21, 31, 41) d'au moins un noeud de détection (20, 30, 40) peut recevoir des signaux de synchronisation (S) émis par l'émetteur de base (11) du poste de base (10), et
- au moins une unité de réception de base (14a, 14b) du poste de base (10) peut recevoir des signaux de mesure envoyés par au moins une unité d'émission de noeud (24, 34, 44) d'au moins un des noeuds de détection (20, 30, 40).

6. Réseau de détecteurs selon la revendication 5, sachant que l'unité de réception de noeud (21, 31, 41) d'au moins un noeud de détection (20, 30, 40) comprend un élément photoélectrique et l'émetteur de base (11) du poste de base (10) comprend un émetteur de communication lumineux pour émettre des signaux lumineux et sachant que le réseau de détecteurs comprend en outre au moins un moyen de réflexion (50), qui est agencé pour réfléchir des signaux de synchronisation (S) émis par l'émetteur de communication lumineux sur l'élément photoélectrique d'au moins un noeud de détection.

7. Procédé de pointage de temps de données de mesure dans un réseau de détecteurs (100), sachant que le procédé comprend :
- la réception d'un signal de synchronisation (S) par un noeud de détection (20, 30, 40) du réseau de détecteurs (100) et redémarrage après cela d'un compteur de temps de noeud (22, 32, 42) du noeud de détection depuis une valeur initiale prédéfinie,
- saisie d'au moins une valeur de mesure par au moins un détecteur de noeud de détection (20, 30, 40),
- transmission d'un signal de mesure par le noeud de détection, sachant que le signal de mesure comprend au moins une valeur de mesure saisie et une valeur de compteur actuelle du compteur de temps de noeud lors de la saisie de celle-ci,
**caractérisé en ce que**
le signal de synchronisation (S) est reçu en temps que signal lumineux par au moins un élément photoélectrique du noeud de détection (20, 30, 40) et le signal de mesure respectif est transmis par le/les nœud(s) de détection (20, 30, 40) sous la forme de signaux à haute fréquence et/ou infrarouges.

8. Procédé de synchronisation de noeuds de détection d'un réseau de détecteurs (100), sachant que le procédé comprend :
- la transmission d'un signal de synchronisation (S) par un poste de base (10) du réseau de détection à au moins un noeuds de détection (20, 30, 40) du réseau de détecteurs,
- exécution d'un procédé de pointage de temps selon la revendication 7 par au moins un noeud de détection (20, 30, 40),
- réception du signal de mesure respectif par le poste de base (10), et
- détermination d'un temps de saisie, pour lequel au moins une valeur de mesure contenue dans le signal de mesure a été saisie, par le poste de base (10) et en référence à une horloge de référence (13) du poste de base, sachant que la détermination a lieu sur la base de la valeur de compteur contenue dans au moins un signal de mesure reçu, appartenant à au moins une valeur de mesure ainsi que d'un temps de synchronisation par rapport à l'horloge de référence (13).

9. Procédé selon la revendication 8, sachant que le signal de synchronisation (S) est transmis sous la forme du signal lumineux par un émetteur de communication lumineux du poste de base (10).

10. Procédé selon l'une quelconque des revendications 8 ou 9, sachant que la détermination du temps de saisie a lieu en tenant compte d'une durée de signal et/ou de temps de traitement du signal de synchronisation (S).

11. Procédé selon l'une des revendications 8 à 10, qui comprend en outre un éclairage d'au moins une cellule photovoltaïque (23, 33, 43) d'au moins un des noeuds de détection (20, 30, 40) par l'émetteur de communication lumineux pour l'alimentation en énergie d'au moins un noeud de détection.
